Europäisches Patentamt

European Patent Office

Office européen des brevets

(19)

(11) **EP 0 693 239 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(21) Anmeldenummer: **94911825.1**

(22) Anmeldetag: **19.03.1994**

(51) Int Cl.$^6$: **H04L 25/02**

(86) Internationale Anmeldenummer:
**PCT/DE94/00306**

(87) Internationale Veröffentlichungsnummer:
**WO 94/24796 (27.10.1994 Gazette 1994/24)**

(54) **GERADENINTERPOLATIONSMETHODE ZUR KANALSTOSSANTWORTADAPTION IN EMPFÄNGERN FÜR TDMA-MOBILFUNKSYSTEME**

LINEAR INTERPOLATION METHOD FOR CHANNEL PULSE RESPONSE ADAPTATION IN RECEIVERS FOR TDMA MOBILE RADIO SYSTEMS

PROCEDE D'INTERPOLATION LINEAIRE PERMETTANT D'ADAPTER LA REPONSE IMPULSIONNELLE DE VOIE DANS DES RECEPTEURS POUR SYSTEMES RADIOTELEPHONIQUES MOBILES AMRT

(84) Benannte Vertragsstaaten:
**FR**

(30) Priorität: **08.04.1993 DE 4311656**

(43) Veröffentlichungstag der Anmeldung:
**24.01.1996 Patentblatt 1996/04**

(73) Patentinhaber: **ROBERT BOSCH GMBH
70442 Stuttgart (DE)**

(72) Erfinder: **HAGMANNS, Franz-Josef
D-71522 Backnang (DE)**

(56) Entgegenhaltungen:
**EP-A- 0 520 969        EP-A- 0 524 597
EP-A- 0 524 756**

- **Fifth European Signal Processing Conference, 18-21/9/1990, Barcelona, ES; Elsevier, Amsterdam, NL, 1990; Zeiten 225-228, Morgül & Dzung: "New optimum recursive parameter estimation/detection using unreliable erasure declaring detectors"**

EP 0 693 239 B1

## Beschreibung

Die Erfindung bezieht sich auf das Problem der adaptiven Datendetektion in einem Mobilfunkempfänger. "Adaptiv" bedeutet, daß im Empfänger eine Einrichtung vorgesehen ist, die die zeitlichen Änderungen der Eigenschaften des Mobilfunkkanals nachvollziehen kann. Solche Einrichtungen arbeiten meist nach dem LMS- (Least Mean Squares) (siehe z.B. [1]) oder dem RLS-(Recursive Least Squares) (siehe z.B. [2]) Algorithmus. Diese Algorithmen adaptieren die Eigenschaften des Übertragungskanals kontinuierlich mit der Zeit.

In der EP-A- 520 969 ist ein Schätzverfahren für die Datendetektion angegeben, bei dem empfangene Abtastwerte eines Zeitschlitzes zunächst beginnend mit dem zuerst empfangenen Wert gespeichert und verarbeitet werden, und zwar bis über einen Fadingeinbruch hinaus; dann erfolgt eine weitere Bearbeitung beginnend mit dem zuletzt gespeicherten Abtastwert, um Schätzwerte der gesendeten Daten zu erzeugen.

In der EP-A 524 756 ist für eine digitale Signalsequenz ein interatives Schätzverfahren angegeben, bei dem eine Schätzsequenz erzeugt und mit der empfangenen Signalsequenz verglichen wird, um eine Fehlerfunktion zu errechnen. Anschließend wird die Schätzsequenz selektiv gestört und erneut eine Fehlerfunktion ermittelt mit dem Ziel, den Vorgang solange zu wiederholen, bis ein minimaler Fehler entsteht.

In der vorliegenden Patentanmeldung wird dargelegt daß die kontinuierlich mit der Zeit adaptierenden Algorithmen unter gewissen, für den Mobilfunk typischen, Bedingungen versagen. Der Grund dafür ist, daß solche Adaptionsalgorithmen als zeitvariante rekursive Filter erster Ordnung angesehen werden können. Ein prinzipiell besseres Verhalten zeigen Algorithmen höherer Ordnung.

Bild 1 zeigt die Struktur von Daten, die in einem Mobilfunksystem burstweise übertragen werden.

Bild 2 ist ein Blockschaltbild der Übertragungsstrecke

Bild 3 stellt die Einteilung eines TDMA-Bursts in Sektoren dar.

Bild 4 zeigt einen Fading-Einbruch in einem TDMA-Burst.

## Modell des Übertragungssystems

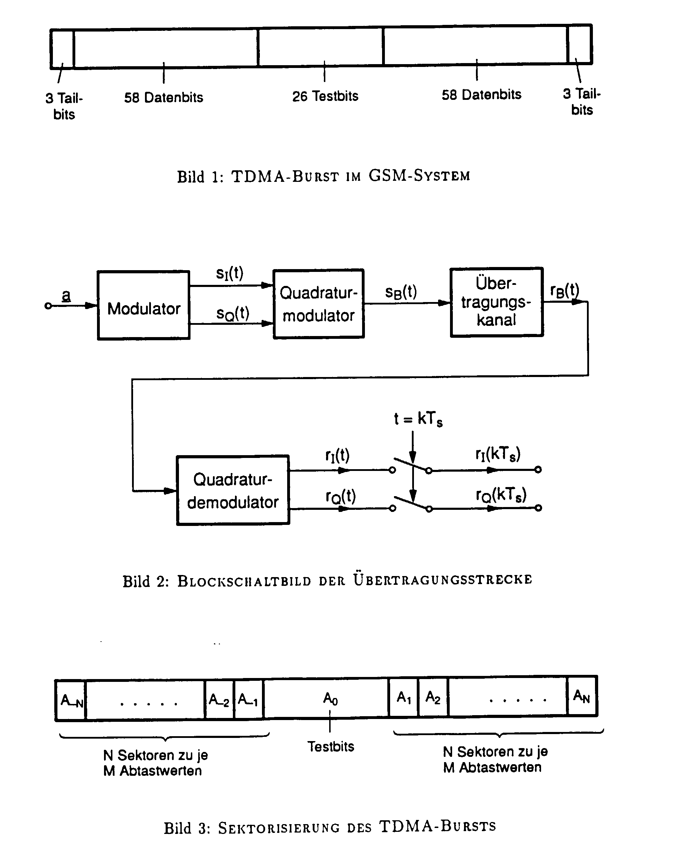

In digitalen TDMA-Mobilfunksystemen werden die Daten burstweise übertragen. Im GSM-Sysem werden z.B. 116 Datenbits zu einem Burst zusammengefaßt. Die dazu gewählte Burststruktur ist im Bild 1 dargestellt. Neben den 116 Datenbits, die in zwei Abschnitten zu je 58 Bits gruppiert sind, enthält der Burst noch an den Enden je 3 sogenannte "Tailbits" und in der Mitte eine sogenannte Testsequenz, bestehend aus 26 Bits, so daß der Burst aus insgesamt 148 Bits besteht.

Die Testsequenz dient zum "Ausmessen" des Übertragungskanals. Dieser läßt sich als lineares zeitvariantes Filter beschreiben [3], das Ausmessen des Übertragungskanals ist damit gleichbedeutend mit einer Schätzung der Kanalstoßantwort.

Ein Maß für die Änderungsgeschwindigkeit des Kanals ist die sogenannte Dopplerfrequenz

$$f_d = f_0 \frac{v}{c}.$$

Darin ist $f_0$ die Trägerfrequenz des gesendeten Signales, $v$ die Geschwindigkeit des mobilen Teilnehmers und c die Lichtgeschwindigkeit. Die Länge eines Bursts ist so gewählt, daß, trotz der möglichen Änderungen, die Kanalstoßantwort während eines Bursts als nahezu konstant angesehen werden kann. Bei GSM gilt diese Annahme für Geschwindigkeiten $v$ bis etwa 250 km/h (die Trägerfrequenz $f_0$ liegt bei 900 MHz, die Burstdauer ist rund 546 μs).

Das erfindungsgemäße Verfahren setzt eine Burstübertragung ähnlich wie bei GSM voraus. Insbesondere ist das Vorhandensein einer Testsequenz in der Mitte des Bursts bedeutsam.

Die für die Definition der Signale wichtigen Teile von Sender und Empfänger sind im **Bild 2** dargestellt. Der Modulator bildet die zu übertragende Datensequenz $\underline{a}$ in das Signal $s(t)$ ab. Es wird angenommen, daß $s(t)$ ein komplexwertiges Tiefpaßsignal mit den Quadraturkomponenten $s_I(t)$ und $s_Q(t)$ ist, d.h.

$$s(t) = s_I(t) + js_Q(t).$$

Dabei ist $j = \sqrt{-1}$ die imaginäre Einheit. Ferner wird angenommen, daß $W_s$ die Bandbreite des Signales ist. $s(t)$ kann daher nach dem Abtasttheorem eindeutig durch die Abtastwerte $s(kT_s)$ mit $T_s = 1/W_s$ repräsentiert werden. $s(t)$ wird durch den Quadraturmodulator in das HF-Signal

$$s_B(t) = \mathrm{Re}\left\{s(t)e^{j2\pi f_0 t}\right\} = s_I(t)\cos 2\pi f_0 t - s_Q(t)\sin 2\pi f_0 t$$

abgebildet, wobei $f_0$ die gewünschte Trägerfrequenz ist. $s_B(t)$ wird gegebenenfalls weiter verstärkt und über die Antenne abgestrahlt.

$r_B(t)$ sei das HF-Empfangssignal, dem, wie $s_B(t)$, gemäß

$$r_B(t) = \mathrm{Re}\left\{r(t)e^{j2\pi f_0 t}\right\} = r_I(t)\cos 2\pi f_0 t - r_Q(t)\sin 2\pi f_0 t$$

ein komplexwertiges Tiefpaßsignal

$$r(t) = r_I(t) + jr_Q(t)$$

zugeordnet werden kann. Der Quadraturdemodulator auf Empfängerseite dient der Gewinnung dieses Signales. $r(t)$ ist wie $s(t)$ ein Tiefpaßsignal der Bandbreite $W_s$; $r(t)$ kann daher ebenfalls durch seine Abtastwerte $r(kT_s)$ repräsentiert werden.

Im Mobilfunk nimmt man an, daß zwischen den Empfangssignal- und Sendesignalabtastwerten die Beziehung

$$r(kT_s) = \sum_l h(l, kT_s)s((k-l)T_s) + n(kT_s)$$

besteht. Die Summe beschreibt eine zeitdiskrete Faltung; $h(l, kT_s)$ ist der $l$-te Koeffizient der (zeitvarianten) Kanalstoßantwort zum Zeitpunkt $t = kT_s$. $n(kT_s)$ symbolisiert eine zusätzliche Störkomponente; im Mobilfunk setzt diese sich gewöhnlich aus thermischem Rauschen und Signalen von Fremdsendern zusammen. Im folgenden wird angenommen, daß diese Störkomponente mittelwertfrei und gaußverteilt ist und die Korrelationseigenschaften

$$\langle n(kT_s)n^\star(lT_s)\rangle = \sigma^2 \delta_{kl}$$

hat. $\langle x \rangle$ wird allgemein als Notation für den Erwartungswert der Zufallsvariablen $x$ verwendet.

In den folgenden Betrachtungen wird die Zeitkonstante $T_s$ stets aus der Notation weggelassen; ferner wird angenommen, daß die Kanalstoßantwortkoeffizienten nur für $l = 0,...,L - 1$ von 0 verschieden sind. Die obige Beziehung zwischen Empfangssignalund Sendesignalabtastwerten lautet dann

$$r(k) = \sum_{l=0}^{L-1} h(l, k)s(k-l) + n(k). \tag{1}$$

Zur Vereinfachung der Notation werden die Kanalstoßantwortkoeffizienten zur Zeit $kT_s$ zu dem Vektor

$$\underline{h}(k) = (h(0,\ k),...,h(L-1,\ k))^T$$

zusammengefaßt. Zur Notation: Vektoren werden durch einen Unterstrich gekennzeichnet. Der erste Summand in Gleichung (1) kann als Nutzanteil, der zweite als Störanteil des Empfangssignales bezeichnet werden.

## 2.2 Allgemeines Prinzip der Detektion

Zur Beschreibung des erfindungsgemäßen Verfahrens ist von Bedeutung, daß zur Ermittlung der gesendeten Daten die Kanalstoßantwort im Empfänger bekannt sein muß. Dies folgt unmittelbar aus Gleichung (1). Angenommen, das Rauschsignal wäre nicht vorhanden, d.h. $n(k) = 0$, dann wäre das Empfangssignal nur vom Sendesignal und der Kanalstoßantwort abhängig. Kennt man daher Empfangssignal und Kanalstoßantwort, dann kann man (1) nach dem Sendesignal auflösen und anschließend durch Inversion der Modulation die gesendeten Daten ermitteln. Umgekehrt gilt: kennt man die Daten, dann kann man (1) nach der Kanalstoßantwort auflösen. Ist $n(k) \neq 0$, dann kann man keine direkte Auflösung von (1) nach $s(k - l)$ oder $h(l,k)$ vornehmen; trotzdem gilt auch hier, daß zur Ermittlung des Sendesignales die Kanalstoßantwort bekannt sein muß und umgekehrt. Bedingt durch das nichtverschwindende Rauschen $n(k)$ sind die ermittelten Werte für die Daten bzw. der Kanalstoßantwort Schätzwerte.

Das allgemeine Prinzip der Detektion kann jetzt wie folgt beschrieben werden. Man teilt den empfangenen Burst in $2N + 1$ Sektoren $A_i$, $-N \leq i \leq +N$, ein, die nicht notwendigerweise die gleiche Länge haben müssen. Die Länge der Sektoren sei aber so gewählt, daß man eine Konstanz der Kanalstoßantwort innerhalb eines Sektors annehmen kann. Der Sektor $A_0$ sei identisch mit der Testsequenz. Eine solche Sektorisierung ist im **Bild 3** dargestellt.

Da die Testsequenz bekannt ist, kann für den Sektor $A_0$ die Kanalstoßantwort bestimmt werden. Da sich die Kanalstoßantworten in benachbarten Sektoren nur wenig voneinander unterscheiden, können mit Hilfe des Kanalstoßantwortschätzwertes im Sektor $A_0$ die Daten der Sektoren $A_{-1}$ und $A_{+1}$ ermittelt werden. Mit diesen Daten können jetzt die Kanalstoßantworten dieser Sektoren geschätzt werden. Diese werden dann wiederum für die Datendetektion der Sektoren $A_{-2}$ und $A_{+2}$ verwendet usw.

Die Schätzung der Kanalstoßantwort im Sektor $A_i$, $i > 0$, wird man nicht nur auf die in diesem Sektor detektierten Daten basieren, sondern auch z.B. auf die Kanalstoßantwort im Sektor $A_{i-1}$. Der Grund dafür ist, daß sich die Kanalstoßantworten von Sektor zu Sektor nur wenig ändern; die Kanalstoßantworten der einzelnen Sektoren sind stark miteinander korreliert.

Die Idee, die der Erfinung zugrunde liegt, besteht im wesentlichen aus der Erkenntnis, daß die Korrelationen der Kanalstoßantwortkoeffizienten möglichst weitgehend ausgenutzt werden sollen, d.h. bei der Ermittlung der Kanalstoßantwort für den Sektor $A_i$ sollen alle Kanalstoßantworten der bereits bearbeiteten Sektoren berücksichtigt werden. Dies ist aber nur dann sinnvoll, wenn die Kanalstoßantwortschätzwerte der bereits bearbeiteten Sektoren auch zuverlässig sind. Aus diesem Grund sollte die Bearbeitung des Bursts beginnend mit dem zuverlässigsten Sektor in Richtung abnehmender Zuverlässigkeit ausgeführt werden (siehe [4]).

### 2.3 Vorbekannte Lösungen

Die bekanntesten Verfahren für die Kanalstoßantwortadaption sind der LMS- und der RLS-Algorithmus. In beiden Fällen bestehen die Sektoren außerhalb der Testsequenz aus nur je einem Signalabtastwert. $\underline{\hat{h}}(i)$ sei der Kanalstoßantwortschätzwert für den $i$-ten Sektor. Für $i > 0$ berechnen beide Algorithmen

$$\underline{\hat{h}}(i) = \underline{\hat{h}}(i - 1) + \underline{P}(i)\,d(i). \tag{2}$$

Darin ist $\underline{P}(i)$ ein Vektor der gleichen Dimension wie $\underline{\hat{h}}(i)$ und

$$d(i) = r(i) - \hat{r}(i) \tag{3}$$

der Fehler zwischen dem tatsächlichen Empfangssignal $r(i)$ und der Empfangssignalnachbildung

$$\hat{r}(i) = \sum_{l=0}^{L-1} \hat{h}(l, i - 1)s(i - l). \tag{4}$$

Gleichung (2) beschreibt, daß $\underline{\hat{h}}(i)$ nur von $\underline{\hat{h}}(i - 1)$, also der geschätzten Kanalstoßantwort im vorangegangenen Sektor, abhängig ist. Die detektierten Daten werden zur Berechnung des Fehlers $d(i)$ benötigt.

Diese Betrachtungen gelten sowohl für den LMS- als auch für den RLS-Algorithmus. Der Unterschied zwischen beiden Algorithmen besteht in der Wahl von $\underline{P}(i)$. Da jeder neue Kanalstoßantwortschätzwert nach (2) nur von dem unmittelbar vorangegangen abhängt, kann man (in Analogie zur Theorie rekursiver zeitdiskreter Filter) von Algorithmen ersten Ordnung sprechen.

Die Zeitrichtung in der Adaptionsgleichung (2) kann umgedreht werden. Man erhält dann

$$\hat{\underline{h}}(i) = \hat{\underline{h}}(i + 1) + \underline{P}(i)\,d(i) \tag{5}$$

Dies ist für die Bearbeitung der Sektoren $A_i$ mit $i < 0$ von Bedeutung.

Algorithmen erster Ordnung versagen unter zwei Bedingungen.

1. Ist der Schätzwert für die Kanalstoßantwort im Sektor $A_{i-1}$ völlig falsch, dann ist auch die Datendektion im Sektor $A_i$ fehlerhaft, da diese gerade mit der geschätzten Kanalstoßantwort des Sektors $A_{i-1}$ ausgeführt wird. Da der Schätzwert für die Kanalstoßantwort im Sektor $A_i$ nur von $\hat{\underline{h}}(i\text{-}1)$ und den Daten des Sektors $A_i$ abhängt, wird dieser auch vollkommen falsch sein. Eine Fehlschätzung der Kanalstoßantwort im Sektor $A_{i-1}$ führt daher mit hoher Wahrscheinlichkeit zu einer Fehlschätzung der Kanalstoßantwort im Sektor $A_i$.

2. Sind die Komponenten des Kanalstoßantwortvektors im Sektor $A_i$ so klein, daß der Nutzanteil des Empfangssignales klein gegenüber dem Störanteil ist, dann wird die Datendetektion in diesem Sektor mit hoher Wahrscheinlichkeit fehlerhaft sein. Aus den Gleichungen (2), (3) und (4) folgt dann, daß die Änderung der Kanalstoßantwort vom Sektor $A_{i-1}$ zum Sektor $A_i$ nicht nachvollziehbar ist; die geschätzte Änderung wird vielmehr völlig zufällig sein. Daraus und aus der geringen Größe der Komponenten von $\underline{h}(i)$ folgt, daß der Schätzwert $\hat{\underline{h}}(i)$ mit großer Wahrscheinlichkeit völlig falsch ist.

Aus diesen beiden Punkten folgt, daß die Algorithmen erster Ordnung eine Adaption durch einen Fading-Einbruch hindurch nicht erlauben. Unter einem Fading-Einbruch versteht man eine Situation, in der die Kanalstoßantwortkoeffizienten so kleine Werte annehmen, daß der Nutzanteil des Empfangssignales im Rauschen verschwindet. Angenommen, der Sektor $A_{i-1}$ wäre von einem Fading-Einbruch betroffen. Aus dem zweiten Punkt folgt nun, daß der Schätzwert für die Kanalstoßantwort im Sektor $A_i$ mit hoher Wahrscheinlichkeit stark fehlerbehaftet sein wird. Aus dem ersten Punkt folgt dann, daß dies auch für alle weiteren Sektoren $A_{i+1}$, $A_{i+2}$ usw. gilt.

Tritt ein Fading-Einbruch in einem Datenabschnitt auf, dann sind die Daten hinter (von der Testsquenz aus gesehen) diesem Fading-Einbruch nicht mehr detektierbar. Die Wahrscheinlichkeit eines solchen Fading-Einbruches steigt mit der Fahrzeuggeschwindigkeit. Dies ist der Grund warum Algorithmen erster Ordnung bei hohen Fahrzeuggeschwindigkeiten versagen. Im GSM-System gilt diese Aussage für Fahrzeuggeschwindigkeiten oberhalb etwa 250 km/h.

## 2.4 Kanalstoßantwortadaption mit Hilfe einer Geradeninterpolation

Die Möglichkeit zur Adaption der Kanalstoßantwort durch einen Fading-Einbruch hin-durch ist Voraussetzung für eine zuverlässige Mobilkommunikation bei sehr hohen Fahrzeuggeschwindigkeiten. Anwendungsbeispiele hierfür sind schnellfahrende Züge, für die Geschwindigkeiten bis zu 500 km/h diskutiert werden. Das GSM-System wurde zunächst für Fahrzeuggeschwindigkeiten bis etwa 250 km/h konzipiert. Eine Verwendung der GSM-Standards beim Bahnmobilfunk ist nur dann möglich, wenn die Methoden zur Kanalstoßantwortadaption und insbesondere ihre Fähigkeit zur Adaption der Kanalstoßantwort durch einen Fading-Einbruch hindurch signifikant verbessert werden können.

Eine signifikante Verbesserung der Kanalstoßantwortadaption ist nur durch Algorithmen höherer Ordnung möglich. Bei solchen Algorithmen ist der Schätzwert $\hat{\underline{h}}(k)$ nicht nur von $\hat{\underline{h}}(k\text{ - }1)$ (bzw. $\hat{\underline{h}}(k + 1)$ bei der Rückwärtsadaption) abhängig, sondern von möglichst vielen bereits ermittelten $\hat{\underline{h}}(k + n)$, $n \neq 0$. Dies ermöglicht ein verbessertes Ausnutzen der Korrelationen der Kanalstoßantworten zu unterschiedlichen Zeiten.

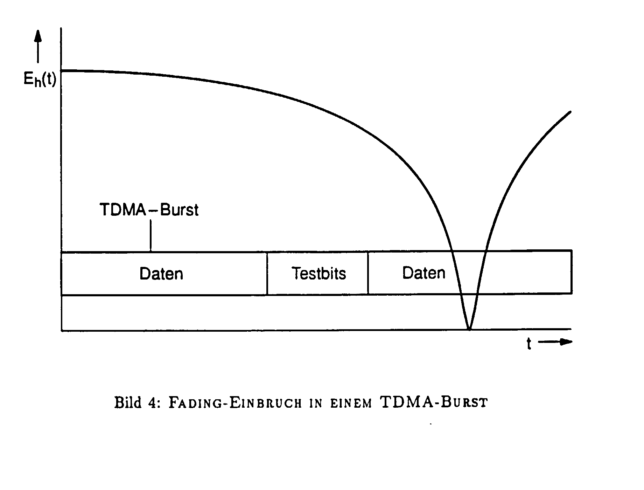

*Beispiel:* Gegeben sei die im **Bild 4** dargestellte Situation.

$$E_h(t) = \sum_{l=0}^{L-1} |h(l,t)|^2$$

ist die Energie der Kanalstoßantwort zur Zeit $t$. Etwa in der Mitte des zweiten Datenabschnittes ist ein Fading-Einbruch zu erkennen. Bei Verwendung eines Algorithmusses erster Ordnung, der nicht durch diesen Fading-Einbruch hindurch adaptieren kann, wären die Datenbits am Ende des zweiten Datenabschnittes nicht mehr detektierbar. Da die Kanalstoßantwortkoeffizienten zu beiden Seiten des Fading-Einbruches jedoch miteinander korreliert sind, ist es durchaus möglich, von den geschätzten Kanalstoßantworten zur linken Seite auf die zur rechten Seite des Fading-Einbruches zu schließen. Dazu sollte jedoch gewährleistet sein, daß der Kanalstoßantwortverlauf zur linken Seite des Fading-Einbruches vollständig bekannt ist, bevor der zur rechten Seite zu ermitteln versucht wird. Es ist also eine Einrichtung vorzusehen, die zunächst alle zuverlässigen Datenbereiche, d.h. Datenbereiche, die nicht von einem Fading-Einbruch betroffen sind, zur Detektion vorsieht bevor ein betroffener Bereich bearbeitet wird.

In [4] heißt es dazu : "Zur zuverlässigkeitsgesteuerten Datendetektion sei die im Bild 3 dargestellte Sektorisierung des Bursts betrachtet. Es sei angenommen, daß jeder Sektor aus $M$ Signalabtastwerten besteht. Zunächst werden die Datenbits der Sektoren $A_{-1}$ und $A_{+1}$ detektiert. Zusätzlich wird zu jeder Datenbitentscheidung ein Maß für seine Zuverlässigkeit ermittelt. Sei $a(k)$ das $k$-te Datenbit und $\underline{r}$ der Vektor mit den Empfangssignalabtastwerten als Komponenten sowie $P(a(k) = a|\underline{r})$ die Posterior-Wahrscheinlichkeit, daß das $k$-te gesendete Datenbit den Wert $\alpha$ hat, dann ist idealerweise

$$\lambda(k) = \left| \ln \frac{P(a(k) = 1|\underline{r})}{P(a(k) = 0|\underline{r})} \right|$$

als Zuverlässigkeitsmaß für die $k$-te Datenbitentscheidung zu verwenden. Verfahren, die diese Werte (zumindest näherungsweise) berechnen können, sind in der statistischen Nachrichtentheorie allgemein bekannt. $\Lambda_i$ sei die Summe aller Zuverlässigkeitsmaße im Sektor $A_i$. $\Lambda_i$ wird im folgenden "mit Zuverlässigkeit des Sektors $A_i$" bezeichnet. Nach der Bearbeitung von $A_{-1}$ und $A_{+1}$ wird das Detektionsergebnis des Sektors mit der kleineren Zuverlässigkeit verworfen. Angenommen, dies wäre der Sektor $A_{+1}$. Übrig bleibt dann das Detektionsergebnis des Sektors $A_{-1}$. Im nächsten Schritt werden dann die Sektoren $A_{-2}$ und wieder $A_{+1}$ bearbeitet, ein Vergleich von $\Lambda_{-2}$ und $\Lambda_{+1}$ ausgeführt und wiederum der Sektor mit der kleineren Zuverlässigkeit verworfen usw. Die Neudetektion des verworfenen Sektors im folgenden Schritt macht nur dann einen Sinn, wenn mit dem ausgewählten Sektor eine Kanaladaption ausgeführt wurde, deren Ergebnis durch geeignete Extrapolation auf den verworfenen Sektor übertragen wird. Nur in diesem Fall kann die Neudetektion des verworfenen Sektors zu einem neuen Ergebnis führen. Wird eine solche Extrapolation nicht ausgeführt, dann wird der Sektor mit der kleineren Zuverlässigkeit nicht verworfen. Der Zuverlässigkeitsvergleich liefert dann nur die Information über die Richtung der weiteren Detektion. Im obigen Fall würde dann im zweiten Schritt nur der Sektor $A_{-2}$ detektiert und seine Zuverlässigkeit $\Lambda_{-2}$ mit $\Lambda_{+1}$ verglichen."

Das erfindungsgemäße Verfahren beruht auf der Annahme, daß bei den betrachteten Fahrzeuggeschwindigkeiten sich die Kanalstoßantwortkoeffizienten linear mit der Zeit ändern. Diese Annahme folgt daraus, daß der Verlauf der Kanalstoßantwortkoeffizienten i.A. in eine Taylor-Reihe entwickelt werden kann. Für sehr kleine Fahrzeuggeschwindigkeiten ist das konstante Glied dieser Reihe dominant, d.h. für sehr kleine Geschwindigkeiten kann man eine Konstanz der Kanalstoßantwort während eines Bursts annehmen. Je größer die Geschwindigkeiten, desto stärker treten die Reihenglieder höherer Ordnung in Erscheinung. Bei den hier zur Diskussion stehenden Geschwindigkeiten reicht es in der Regel aus, neben dem konstanten Glied noch das lineare zu berücksichtigen.

Der Burst wird, wie im Bild 3 dargestellt, in $2N + 1$ Sektoren $A_i$, $i = -N,...,+N$, eingeteilt, wobei hier vorausgesetzt werden soll, daß alle Sektoren die gleiche Länge haben, d.h. je aus $M$ Signalabtastwerten bestehen. Es wird angenommen, daß der Sektor $A_0$ vollständig in der Testsequenz liegt; mit der Schätzung der Kanalstoßantwort aus der Testsequenz ist damit die Kanalstoßantwort für diesen Sektor bekannt.

Ein Burst wird in $2N$ Schritten bearbeitet, wobei im $k$-ten Schritt der Sektor $A_i$ detektiert wird, der von der zuverlässigkeitsgesteuerten Datendetektion dafür vorgesehen ist [4]. Durch die zuverlässigkeitsgesteuerte Datendetektion sollte gewährleistet sein, daß zunächst der Datenabschnitt detektiert wird, in dem kein Fading-Einbruch vorliegt. Im Bild 4 wäre dies der linke Datenabschnitt. Solange die Annahme des linearen Verlaufs der Kanalstoßantwortkoeffizienten gültig ist, können nie mehr als ein Fading-Einbruch innerhalb eines Bursts auftreten, d.h. einer der beiden Datenabschnitte ist immer frei von einem Fading-Einbruch. Die zuverlässigkeitsgesteuerte Datendetektion wird daher zunächst diesen Abschnitt vollständig bearbeiten, bevor ein von einem Fading-Einbruch betroffener Sektor berücksichtigt wird.

Der generelle Ablauf der Bearbeitung eines Burst ist nun wie folgt. Zunächst werden die Sektoren $A_{-1}$ und $A_{+1}$ detektiert. Dazu wird der aus der Testsequenz gewonnene Schätzwert für die Kanalstoßantwort verwendet. Die zur Detektion des Sektors $A_i$ verwendete Kanalstoßantwort wird im folgenden stets mit $\hat{\underline{x}}_i$ bezeichnet. Die für den Sektor $A_i$ endgültig geschätzte Kanalstoßantwort wird mit $\hat{\underline{h}}_i$ bezeichnet. Für die Detektion der Sektoren $A_{-1}$ und $A_{+1}$ gilt also $\hat{\underline{x}}_{\pm1}$ = $\hat{\underline{h}}_0$. Nach der Detektion der Sektoren $A_{-1}$ und $A_{+1}$ wird die Kanalstoßantwort über beide Sektoren adaptiert, wozu einfach der LMS-Algorithmus verwendet werden kann. Der Startwert für diese Adaption ist $\hat{\underline{x}}_{\pm1}$. Die Adaptionsergebnisse sind die endgültigen Schätzwerte für die Kanalstoßantworten dieser beiden Sektoren, $\hat{\underline{h}}_{-1}$ und $\hat{\underline{h}}_{+1}$. Die zuverlässigkeitsgesteuerte Datendetektion entscheidet jetzt, welcher Sektor als nächster detektiert werden soll. Angenommen, dies wäre der Sektor $A_{-2}$. Da noch kein Datenabschnitt vollständig detektiert ist, kann der Sektor $A_{-2}$ nicht von einem Fading-Einbruch betroffen sein, wie oben begründet wurde. Daraus folgt, daß man für die Detektion des Sektors $A_{-2}$ einfach $\hat{\underline{x}}_{-2} = \hat{\underline{h}}_{-1}$, verwenden kann. Nun sei allgemein angenommen, daß der Sektor $A_i$ zur Detektion ansteht. Zur Vereinfachung der Beschreibung sei angenommen, daß $i > 0$. Welche Kanalstoßantwort zur Detektion verwendet wird, hängt nun davon ab, ob der linke Datenabschnitt bereits vollständig detektiert wurde oder nicht. Ist dies nicht der Fall, dann kann, wie oben begründet wurde, kein Fading-Einbruch im betrachteten Sektor vorliegen. Zur Detektion kann dann einfach $\hat{\underline{x}}_i = \hat{\underline{h}}_{i-1}$ verwendet werden. Die nach der Detektion des Sektors vorzunehmende Adaption der Kanalstoßantwort über diesen Sektor erfolgt wiederum mit dem LMS-Algorithmus, das Adaptionsergebnis ist der Kanalstoßantwortschätzwert $\hat{\underline{h}}_i$. Ist jedoch der linke Datenabschnitt bereits vollständig bearbeitet, dann besteht die Möglichkeit eines Fading-Einbruches im betrachteten Sektor. In diesem Fall empfiehlt es sich, nicht einfach $\hat{\underline{x}}_i = \hat{\underline{h}}_{i-1}$ zu verwenden, sondern $\hat{\underline{x}}_i$ aus allen bereits ermittelten $\hat{\underline{h}}_n$ zu konstruieren. $\hat{h}_n(l)$ sei die $l$-te Komponente von $\hat{\underline{h}}_n$. Für jedes $l$ konstruiert man nun eine Gerade so, daß sie im Sinne des kleinsten quadratischen Fehlers alle bereits ermittelten $\hat{h}_n(l)$ optimal interpoliert. Diese Gerade extrapoliert man in den Sektor $A_i$. Die Extrapolationsergebnisse bilden dann den Vektor $\hat{\underline{x}}_i$. Unabhängig davon, wie $\hat{\underline{x}}_i$ berechnet wird, folgt der Detektion des Sektors $A_i$ eine Adaption der Kanalstoßantwort über diesen Sektor durch den LMS-Algorithmus zur Berechnung des endgültigen Schätzwertes $\hat{\underline{h}}_i$. Startwert für diese Adaption ist $\hat{\underline{x}}_i$.

Zur mathematischen Formulierung der Extrapolation sei (für $i > 0$)

$$\alpha_k = \sum_{n=-N}^{i-1} n^k, \qquad k = 0, 1, 2$$

$$\underline{\beta}_k = \sum_{n=-N}^{i-1} n^k \hat{\underline{h}}_n, \qquad k = 0, 1, 2$$

$$\underline{c}_0 = \frac{\alpha_2 \underline{\beta}_0 - \alpha_1 \underline{\beta}_1}{\alpha_0 \alpha_2 - \alpha_1^2}$$

$$\underline{c}_1 = \frac{\alpha_0 \underline{\beta}_1 - \alpha_1 \underline{\beta}_0}{\alpha_0 \alpha_2 - \alpha_1^2}.$$

Dann ist

$$\hat{\underline{x}}_i = \underline{c}_0 + i\underline{c}_1.$$

## Literatur

[1] B. Widrow, J.M. McCool, M.G. Larimore, C.R. Johnson, "Stationary and Nonstationary Learning Characteristics of the LMS Adaptive Filter", Proceedings of the IEEE, vol. 64, no. 8, pp. 1151-1162, 1976.
[2] E. Eleftheriou, D.D. Falconer, "Tracking Properties and Steady-State Performance of RLS Adaptive Filter Algorithms, IEE Transactions on Acoustic, Speech and Signal Processing, vol. ASSP-34, no. 5, pp. 1097-1110, 1986.
[3] P.A. Bello, "Characterization of Randomly Time-Variant Linear Channels", IEEE Transactions on Communications Systems, vol. CS-11, pp. 360-393, 1963
[4] F.J. Hagmanns, "Zuverlässigkeitsgesteuerte Datendetektion in Empfängern für TDMA-Mobilfunksysteme", internationale Patentanmeldung PCT/DE 94/00308 (= WO-A-94/24799, veröffentlicht am 27/10/94), entsprechend der Deutschen Patentschrift DE-C 43 11 604 veröffentlicht am 28/7/94.

## Patentansprüche

1. Verfahren zur Adaption der zeitveränderlichen Kanalstoßantwort während eines Bursts in Empfängern für TDMA-Mobilfunksysteme, wobei jeder Burst in der Mitte zwischen zwei Datenabschnitten eine dem Empfänger bekannte Testsequenz enthält, mit der eine initiale Schätzung der Kanalstoßantwort möglich ist, dadurch gekennzeichnet, daß

   - das Empfangssignal eines Bursts abgetastet wird,
   - der empfangene Burst in 2N + 1 Sektoren $A_{-N}, ..., A_{+N}$ bestehend je aus N Signalabtastwerten unterteilt wird, wobei die Sektorengröße so gewählt ist, daß die Kanalstoßantwort innerhalb eines Sektors als konstant angesehen werden kann,
   - ein Burst in 2N Schritten bearbeitet wird,
   - ein Algorithmus dadurch eine zuverlässigkeitsgesteuerte Datendetektion gewährleistet, daß zunächst der Datenabschnitt detektiert wird, in dem kein Fading-Einbruch vorliegt,

- im k-ten Schritt duch den Algorithmus ein Sektor $A_i$, $i \neq 0$ zur Bearbeitung ausgesucht wird, wobei für $i > 0$ der Sektor $A_{i-1}$ bzw. für $i < 0$ der Sektor $A_{i+1}$ bereits bearbeitet sein muß,
- vor der Detektion des Sektors $A_i$ ein Vektor $\underline{\hat{x}}_i$ berechnet wird, der als Kanalstoßantwort für die Detektion des Sektors $A_i$ verwendet wird, wobei mit $\underline{\hat{h}}_n$, dem Schätzwert für die Kanalstoßantwort des bereits bearbeiteten n-ten Sektors,

$$\# \; \underline{\hat{x}}_i = \underline{\hat{h}}_{i-1} \; \text{ist, und}$$

- falls $i > 0$ und noch nicht alle Sektoren $A_n$, $-N \leq n \leq -1$, bearbeitet wurden,

$$\underline{\hat{x}}_i = \underline{c}_0 + i\underline{c}_1 \; \text{ist,}$$

wobei

$$\underline{c}_0 = \frac{\alpha_2 \underline{\beta}_0 - \alpha_1 \underline{\beta}_1}{\alpha_0 \alpha_2 - \alpha_1^2}$$

$$\underline{c}_1 = \frac{\alpha_0 \underline{\beta}_1 - \alpha_1 \underline{\beta}_0}{\alpha_0 \alpha_2 - \alpha_1^2}$$

ist, worin gilt:

$$\alpha_k = \sum_{n=-N}^{i-1} n^k, \qquad k = 0, 1, 2, \ldots,$$

$$\underline{\beta}_k = \sum_{n=-N}^{i-1} n^k \underline{\hat{h}}_n, \qquad k = 0, 1, 2, \ldots,$$

- falls $i > 0$ und bereits alle Sektoren $A_n$, $-N \leq n \leq -1$, bearbeitet wurden,

$$\underline{\hat{x}}_i = \underline{\hat{h}}_{i+1} \; \text{ist,}$$

- falls $i < 0$ und noch nicht alle Sektoren $A_n$, $+1 \leq n \leq +N$, bearbeitet wurden,

$$\underline{\hat{x}}_i = \underline{c}_0 + i\underline{c}_1 \; \text{ist,}$$

wobei

$$\underline{c}_0 = \frac{\alpha_2 \underline{\beta}_0 - \alpha_1 \underline{\beta}_1}{\alpha_0 \alpha_2 - \alpha_1^2}$$

$$\underline{c}_1 = \frac{\alpha_0 \underline{\beta}_1 - \alpha_1 \underline{\beta}_0}{\alpha_0 \alpha_2 - \alpha_1^2}$$

ist, worin gilt:

$$\underline{\alpha}_k = \sum_{n=i+1}^{N} n^k \qquad k = 0, 1, 2, \ldots,$$

$$\underline{\beta}_k = \sum_{n=i+1}^{N} n^k \hat{\underline{h}}_n \qquad k = 0, 1, 2, \ldots,$$

- falls i < 0 und bereits alle Sektoren $A_n$, $+1 \leq n \leq +N$, bearbeitet wurden

$$\hat{\underline{x}}_i = \hat{\underline{h}}_{i-1} \text{ ist,}$$

- nach der Detektion des Sektors $A_i$ ein Schätzwert $\hat{\underline{h}}_i$ für die Kanalstoßantwort in diesem Sektor berechnet wird, indem, beginnend mit $\hat{\underline{x}}_i$, mit dem LMS-Algorithmus über den Sektor adaptiert wird,
- die obigen Schritte solange ausgeführt werden, bis alle Sektoren bearbeitet sind.

## Claims

1. Method for adaptation of the time-variable channel impulse response during a burst in receivers for TDMA mobile radio systems, each burst including in the centre between two data sections a test sequence which is known to the receiver and by means of which an initial estimate of the channel step-function response is possible, characterized in that

- the received signal of a burst is sampled,
- the received burst is divided into 2N + 1 sectors $A_{-N},\ldots, A_{+N}$ each comprising N signal samples, the sector size being selected such that the channel step-function response can be regarded as being constant within a sector,
- a burst is processed in 2N steps,
- an algorithm ensures reliability-controlled data detection in that the data section is initially detected in which there is no fading incursion,
- in the k-th step, a sector $A_i$, $i \neq 0$ is sought by the algorithm for processing, the sector $A_{i-1}$ having already to be processed for i > 0, and the sector $A_{i+1}$ for i < 0,
- before the detection of the sector $A_i$, a vector $\hat{\underline{x}}_i$ is calculated which is used as the channel step-function response for the detection of the sector $A_i$, where using, $\hat{\underline{h}}_n$, the estimated value for the channel step-function response of the already processed n-th sector

$$\# \; \hat{\underline{x}}_i = \hat{\underline{h}}_{i-1} \text{ and}$$

if i > 0 and the sectors $A_n$, $-N \leq n \leq -1$ have not yet been processed,

$$\hat{\underline{x}}_i = \underline{c}_0 + i\underline{c}_1$$

where

$$\underline{c}_0 = \frac{\alpha_2 \underline{\beta}_0 - \alpha_1 \underline{\beta}_1}{\alpha_0 \alpha_2 - \alpha_1^2}$$

9

$$\underline{c}_1 = \frac{\alpha_0 \underline{\beta}_1 - \alpha_1 \underline{\beta}_0}{\alpha_0 \alpha_2 - \alpha_1^2}$$

where

$$\alpha_k = \sum_{n=-N}^{i-1} n^k, \qquad k = 0, 1, 2, \ldots,$$

$$\underline{\beta}_k = \sum_{n=-N}^{i-1} n^k \hat{\underline{h}}_n, \qquad k = 0, 1, 2, \ldots,$$

if $i > 0$ and all the sectors $A_n$, $-N \leq n \leq -1$ have already been processed,

$$\hat{\underline{x}}_i = \hat{\underline{h}}_{i+1} \text{ is,}$$

if $i < 0$ and all the sectors $A_n$, $+1 \leq n \leq +N$ have not yet been processed,

$$\hat{\underline{x}}_i = \underline{c}_0 + i\underline{c}_1 \text{ is,}$$

where

$$\underline{c}_0 = \frac{\alpha_2 \underline{\beta}_0 - \alpha_1 \underline{\beta}_1}{\alpha_0 \alpha_2 - \alpha_1^2}$$

$$\underline{c}_1 = \frac{\alpha_0 \underline{\beta}_1 - \alpha_1 \underline{\beta}_0}{\alpha_0 \alpha_2 - \alpha_1^2}$$

where

$$\underline{\alpha}_k = \sum_{n=i+1}^{N} n^k \qquad k = 0, 1, 2, \ldots,$$

$$\underline{\beta}_k = \sum_{n=i+1}^{N} n^k \hat{\underline{h}}_n \qquad k = 0, 1, 2, \ldots,$$

if $i < 0$ and all the sectors $A_n$, $+1 \leq n \leq +N$ have already been processed,

$$\hat{\underline{x}}_i = \hat{\underline{h}}_{i-1}$$

.    after the detection of the sector $A_i$, an estimated value $\hat{\underline{h}}_i$ is calculated for the channel step-function response in this sector in that starting with $\hat{\underline{x}}_i$, adaptation is carried out over the sector using the LMS algorithm,

. the above steps are carried out until all the sectors have been processed.

**Revendications**

1. Procédé d'adaptation de la réponse impulsionnelle de canal variable dans le temps au cours d'une salve dans les récepteurs pour des systèmes de radio mobile AMRT, chaque salve comporte au milieu, entre deux segments de données, une séquence de test connue du récepteur, permettant une évaluation initiale de la réponse impulsionnelle de canal,
caractérisé en ce que

   - on détecte le signal de réception d'une salve,
   - on subdivise la salve reçue en $(2N + 1)$ secteurs $A_{-N},..., A_{+N}$ composés chaque fois de N valeur de détection de signal,
   - la taille des secteurs étant choisie pour que la réponse impulsionnelle de canal dans un secteur puisse être considérée comme constante,
   - on traite une salve en 2N étapes,
   - on réalise un algorithme par une détection de données commandée en fiabilité de façon à détecter tout d'abord le segment de données dans lequel il n'y a pas d'évanouissement,
   - dans l'étape (k), on recherche par l'algorithme, un secteur $A_i$, $i \neq 0$ à traiter, et pour $i > 0$, le secteur $A_{i-1}$ ou pour $i < 0$, le secteur $A_{i+1}$ doit déjà avoir été traité,
   - avant la détection du secteur $A_i$, on calcule un vecteur $\hat{\underline{x}}_i$ qui est utilisé comme réponse impulsionnelle de canal pour la détection du secteur $A_i$, et avec $\hat{\underline{h}}_n$, on a la valeur évaluée pour la réponse impulsionnelle de canal du secteur d'ordre (n) déjà traité

$$\neq \hat{\underline{x}}_i = \hat{\underline{h}}_{i-1} \text{ et,}$$

   - dans le cas $i > 0$ et si tous les secteurs $A_n$, $-N \leq n \leq -1$, n'ont pas encore été traités, on a :

$$\hat{\underline{x}}_i = \underline{c}_o + i\underline{c}_1 \text{ ,}$$

avec

$$\underline{c}_o = \frac{\alpha_2 \underline{\beta}_o - \alpha_1 \underline{\beta}_1}{\alpha_o \alpha_2 - \alpha_1^2}$$

$$\underline{c}_1 = \frac{\alpha_o \underline{\beta}_1 - \alpha_1 \underline{\beta}_o}{\alpha_o \alpha_2 - \alpha_1^2}$$

dans lesquelles

$$\alpha_k = \sum_{n=-N}^{i-1} n^k \text{ , } \quad k = 0,1,2 \text{ , } \ldots$$

$$\underline{\beta}_k = \sum_{n=-N}^{i-1} n^k \hat{\underline{h}}_n \text{ , } \quad k = 0,1,2 \text{ , } \ldots$$

- dans le cas i > 0 et si tous les secteurs $A_n$, $-N \leq n \leq -1$, ont déjà été traités, on a

$$\hat{\underline{x}}_i = \hat{\underline{h}}_{i+1} \, ,$$

- dans le cas i < 0 et si tous les secteurs $A_n$, $+1 \leq n \leq +N$, ont déjà été traités, on a

$$\hat{\underline{x}}_i = \underline{c}_o + i\underline{c}_1 \, ,$$

avec

$$\underline{c}_o = \frac{\alpha_2 \underline{\beta}_o - \alpha_1 \underline{\beta}_1}{\alpha_o \alpha_2 - \alpha_1^2}$$

$$\underline{c}_1 = \frac{\alpha_o \underline{\beta}_1 - \alpha_1 \underline{\beta}_o}{\alpha_o \alpha_2 - \alpha_1^2}$$

avec

$$\underline{\alpha}_k = \sum_{n=i+1}^{N} n^k \, , \quad k = 0, \ 1, \ 2, \dots \, ,$$

$$\underline{\beta}_k = \sum_{n=i+1}^{N} n^k \hat{\underline{h}}_n \, , \quad k = 0, \ 1, \ 2 \, , \dots .$$

- dans le cas i < 0 et si tous les secteurs $A_n$, $+1 \leq n \leq +N$, ont déjà été traités, on a

$$\hat{\underline{x}}_i = \hat{\underline{h}}_{i+1} \, ,$$

- après la détection du secteur $A_i$ on calcule une valeur évaluée $\hat{\underline{h}}_i$ pour la réponse impulsionnelle de canal dans ce secteur en ce qu'en commençant par $\hat{\underline{x}}_i$, on adapte avec l'algorithme LMS sur ce secteur,
- on exécute les étapes ci-dessus jusqu'à ce que tous les segments soient traités.

3 Tail-bits     58 Datenbits     26 Testbits     58 Datenbits     3 Tail-bits

Bild 1: TDMA-Burst im GSM-System

Bild 2: Blockschaltbild der Übertragungsstrecke

$A_{-N}$ ..... $A_{-2}$ $A_{-1}$   $A_0$   $A_1$ $A_2$ ..... $A_N$

N Sektoren zu je M Abtastwerten     Testbits     N Sektoren zu je M Abtastwerten

Bild 3: Sektorisierung des TDMA-Bursts

Bild 4: FADING-EINBRUCH IN EINEM TDMA-BURST